# EUROPEAN PATENT SPECIFICATION

(11) **EP 4 141 742 B1**
(45) Date of publication and mention of the grant of the patent: **01.10.2025**
(21) Application number: 22189349.8
(22) Date of filing: 08.08.2022
(51) Int. Cl.: G06K 19/073, G06K 19/077, H01R 13/00

(54) **FASTENER ASSEMBLY WITH ASSEMBLY VERIFICATION**
BEFESTIGUNGSANORDNUNG MIT MONTAGEPRÜFUNG
ENSEMBLE DE FERMETURE AVEC VÉRIFICATION D'ASSEMBLAGE

(30) Priority: 23.08.2021 EP 21382774; 28.02.2022 EP 22159289
(43) Date of publication of application: 01.03.2023
(73) Proprietor: Illinois Tool Works, Inc., Glenview, Illinois 60025 (US)
(72) Inventor: ELLIS, Richard, Glenview, 60025 (US); DIEZ HERRERA, Victor, Glenview, 60025 (US)
(74) Representative: HGF

(56) References cited:
- EP-A1- 3 822 497
- WO-A1-2008/142490
- WO-A1-2015/143183
- US-A1- 2007 069 909
- US-A1- 2020 412 058

## Description

The invention relates to a fastener assembly. In particular, the invention relates to a fastener assembly with an assembly verification. More specifically, the invention relates to a fastener assembly including a radio-frequency identification (RFID) system for assembly verification.

### Background

Fastener assemblies may be used in a variety of applications, including automotive manufacturing, where fasteners are used to fasten a number of components to a vehicle structure. For example, it is known that fasteners are used to attach interior trim parts and panels to the chassis of a vehicle to secure the part.

Fasteners for vehicles are used for coupling between trim parts, or between panels, and also between trim parts and panels. In particular, fasteners may facilitate the coupling, separation and recoupling between two associated parts. Typically, such a fastener has two parts: a head and a clip. The head of the fastener is secured or otherwise provided on a first assembly part. The clip of the fastener is likewise secured or otherwise provided on a second assembly part. When the head and the clip of the fastener are assembled together, the first and second assembly parts are likewise assembled. EP3822497 which is reflected in the preamble of claim 1 discusses an example of a fastening clip for attaching one or more components, such as airbag devices, to an external structure.

In an automotive manufacturing process, there are many components which need to be assembled together, which inherently involves a large number of fasteners. When all the components of the vehicle are assembled together, the vehicle undergoes an inspection to check the quality of the product and fittings. This involves verifying that all fasteners are firmly in place and that all components are properly installed Since there are many installed components and fasteners, the process can be time-consuming and tedious. The verification process is especially tedious when the fasteners are internal of the vehicle, or in hard-to-reach / hidden locations. In addition, when components or fasteners are not correctly assembled, this leads to vibrations during the running of the vehicle.

Some vehicles have existing mechanisms that verify the closure of particular vehicle components, for example the closure of a vehicle door, trunk, hood or fuel cap. Figure 1 illustrates a verification system 1 for a vehicle 11 as described in US6847856B1 that verifies the closure of a vehicle hood 13. The hood 13 includes three RFID tags 3 at locations on the rear of the hood. Similarly, the body 15 of the vehicle 11 includes three RFID tags 5 positioned to align with the RFID tags 3 of the hood 13. The positioning and orientation of the hood 13 relative to the body 15 is compared to determine whether the hood is closed. However, such a verification system is suitable only for large external components, and is not suitable for verifying the correct installation of fasteners or the correct assembly of vehicle parts in a manufacturing process. Instead, US6847856B1 relates to a verification system used post-manufacture, to verify, to the owner of the vehicle, the closure of a hood.

It would be desirable to provide a fastener assembly that can alleviate or mitigate one or more of the aforementioned problems. Particularly, it is an object of the invention to provide a fastener assembly that is efficient and simple to install. It is another object of the invention to provide a fastener assembly that facilitates a simple and user-friendly verification of its "correct" assembly, especially when the fastener assembly is located internally or in hard-to-reach areas.

The present invention provides at least an alternative to fastener assemblies of the prior art.

### Summary of the Invention

In accordance with the present invention there is provided a fastener assembly according to the appended claims.

According to an aspect of the present invention, there is provided a fastener assembly for fastening a component to a vehicle structure, comprising: a head member and a base member operably coupleable with one another, and a RFID system, operably coupled to the head member and the base member and configured to actuate transmission of a verification signal when the head member and the base member are in a predetermined position relative to one another in an assembled configuration.

Thus, when the header member and the base member are assembled together, a signal is transmitted to verify their assembly. The fastener assembly can be installed to couple components together, and the complete coupling or installation is verified by the transmission of the signal. By transmitting a verification signal in this way, the correct assembly of the fastener (and of the components coupled together) is confirmed in a simple and efficient manner. This is particularly beneficial as the verification is transmitted even if the fastener assembly is hidden from view, located internally, or placed in a hard-to-reach area.

Advantageously, in specific embodiments, the predetermined position may be a predetermined distance between a reference point of the header member and a reference point of the base member when in the assembled configuration.

Advantageously, in specific embodiments, the RFID system may comprise at least one RFID tag, configured to transmit the verification signal.

Advantageously, in some embodiments, the at least one RFID tag may comprise a first tag portion mounted to the base member, and a second tag portion, disconnected from the first tag portion and mounted to the head member, each one of the first tag portion and the second tag portion being adapted to operably connect to one another so as to form the at least one RFID tag when the head member and the base member are in the assembled configuration. This is particularly advantageous because the operable RFID tag is only formed when the head member and the base member are assembled together. This improves a specific accuracy of assembly verification since a non-assembled, or incompletely assembled, head member and base member would not form a RFID tag capable of transmitting the verification signal or responding to an RFID reader interrogation.

Advantageously, in some embodiments, the first tag portion may comprise an Integrated Circuit (chip) adapted to provide identity information, and the second tag portion may comprise a contact member, configured to electrically connect a missing link within said first tag portion so as to change said first tag portion into an operable RFID tag. In this particular example, the contact member acts as a switch element configured to turn the RFID tag located on the first tag portion ON or OFF, i.e. when assembled the connector is bridging a missing link of the tag, wherein, when disassembled or not correctly assembled, the connector is not electrically bridging the missing connector, rendering the RFID tag of the first tag portion inoperable.

Alternatively, the first tag portion may comprise an Integrated Circuit (chip) adapted to provide identity information, and the second tag portion may comprise an antenna member, adapted to receive and modulate an interrogation signal from an RFID reader. When connecting the two portions, the RFID tag is made operable to respond to any interrogation signals from respective reader(s).

Advantageously, in some embodiments, the RFID system may comprise a RFID reader, configured to interrogate the at least one RFID tag and provide the verification signal to a user.

Advantageously, in specific embodiments, the fastener assembly may comprise a first RFID tag, operably mounted to the base member, and a second RFID tag, operably mounted to the head member, each one adapted to transmit a respective first and second RFID response signal when interrogated by the RFID reader, the RFID reader being configured to determine a relative position between the reference point of the header member and the reference point of the base member and provide the verification signal to a user when the relative position is less than or equal to the predetermined distance. By providing the verification signal when the relative position is less than or equal to a predetermined distance, a signal can be transmitted when the header member and the base member are suitable coupled with one another.

Advantageously, in alternative embodiments, the fastener assembly may comprise a first RFID tag, operably mounted to the base member, and a second RFID tag, operably mounted to the head member, each one adapted to transmit a respective first and second RFID response signal when interrogated by the RFID reader, wherein the first and second RFID response signal are combined to a characteristic response signal transmitted to the RFID reader when the head member and the base member are in the assembled configuration.

Advantageously, in some embodiments, the at least one RFID tag may be a passive tag.

Advantageously, said RFID system comprises an antenna member operably coupleable to said head member.

Advantageously, said header member further comprises at least one biasing member adapted to operably engage with said antenna member and biasingly engage with said base member when in said assembled configuration.

Alternatively, said header member further comprises at least one hook member adapted to operably engage with said antenna member and lockingly engage with said base member when in said assembled configuration.

### Brief Description of the Drawings

Embodiments of the invention are now described, by way of example only, hereinafter with reference to the accompanying drawings, in which:

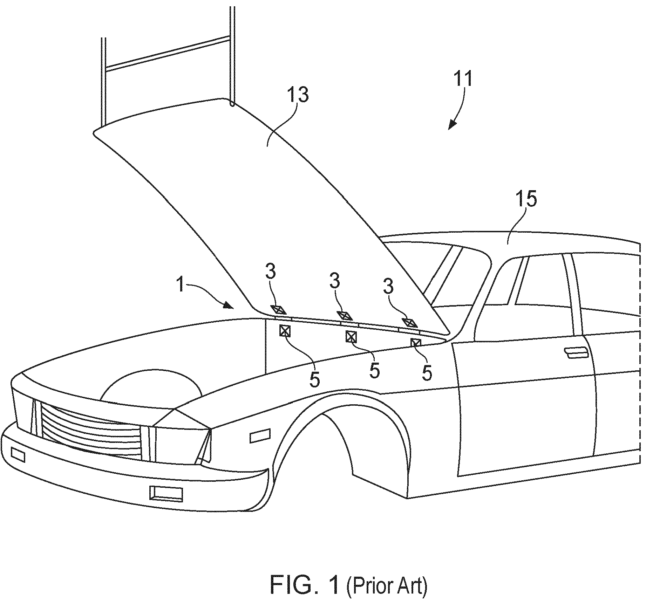

**Figure 1** **(PRIOR ART)** illustrates a known alignment verification system for a vehicle hood and vehicle body, utilising RFID tags;
**Figure 2** illustrates a perspective view of a fastener assembly including a header and a base; and
**Figure 3** illustrates a perspective view of a fastener assembly, showing **(a)** a base with a portion of a RFID tag on its upper surface, **(b)** a header with another portion of a RFID tag on its lower surface, **(c)** the spatial relation between the RFID tag portions on the upper surface of the base and the RFID tag on the lower surface of the header, and **(d)** the header and the base in an assembled configuration;
**Figure 4** illustrates another example embodiment of the fastener assembly with the antenna coupled to the head and biasingly engaged towards the connector plate of the base when assembled (a) in the assembled (i.e. locked) configuration, (b) in the pre-assembled (i.e. unlocked) configuration, and (c) in an exploded view;
**Figure 5** illustrates the fastener head of Figure 4 in (a) a perspective side view without the antenna showing the profile feature on the end plate, (b) a perspective partial top view showing the profile feature and (c) in a perspective top view with coupled antenna;
**Figure 6** illustrates the fastener assembly of Figure 4, (a) in a preassembled configuration, (b) in an assembled (i.e. locked) configuration with the fastener base transparent to show details of the fastener head during assembly and (c) a partial close-up view of the biasing members of the fastener head;
**Figure 7** illustrates the fastener head of Figure 4 (a) in a perspective side view without the antenna, (b) in a side view with coupled antenna and (c) in a partial close up perspective bottom view with coupled antenna;
**Figure 8** illustrates another example embodiment of the fastener assembly (a) a perspective side view of the fastener in an assembled configuration (i.e. locked) and (b) a close up perspective bottom view of the hook members when the fastener is in the assembled configuration (i.e. locked), and
**Figure 9** illustrates the fastener head of the fastener assembly of Figure 8 (a) without the antenna, (b) in a side view with coupled antenna and (c) in a perspective bottom view with the coupled antenna.

### Detailed Description

The described example embodiment relates to a fastener assembly and particularly to a fastener assembly that verifies the installation of two components, for example an airbag and a structure. However, the invention is not necessarily restricted to a fastener assembly for verifying the installation of an airbag and a structure, but may also be used for verifying the installation of any component or structure to another.

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second", "third" etc. merely indicate that different instances of like objects are being referred to and are not intended to imply that the objects so described must be in a given sequence, either temporally, spatially, in ranking or in any other manner.

Like reference numerals are used to depict like features throughout.

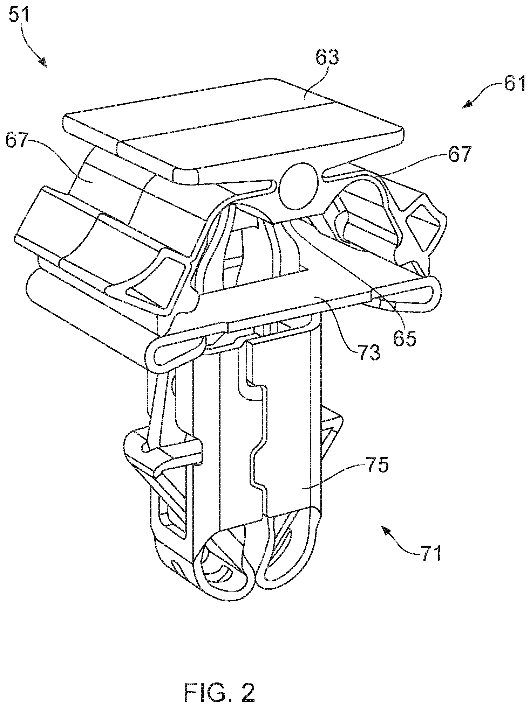

Referring now to Figure 2, there is shown a fastener assembly 51 including a fastener head 61 and a base 71 in a partly assembled (i.e. uncoupled or unlocked) configuration. The head 61 has a planar end plate 63 at a proximal end of the fastener assembly 51. The base 71 has a clip 75 at a distal end of the fastener assembly 51 opposite the end plate 63. In this example embodiment, the end plate 63 converges towards a central rib 65 extending longitudinally in a plane parallel to the plane of the end plate 63. The fastener head 61 includes two wings 67. Each one of the two wings 67 protrudes laterally away from a respective side of the rib 65 and extends down towards the base 71 (whin in the partly assembled configuration, i.e. unlocked). The base 71 is provided with a connector plate 73 operably positioned between the two wings 67 of the head 61 and the clip 75, during use. In this embodiment, the connector plate 73 is orientated in a plane parallel to that of the end plate 63 and the central rib 65. The tip of each wing 67 is adapted to contactingly engage with the connector plate 73 during use (i.e, when lockingly couple the fastener head 61 and base 71).

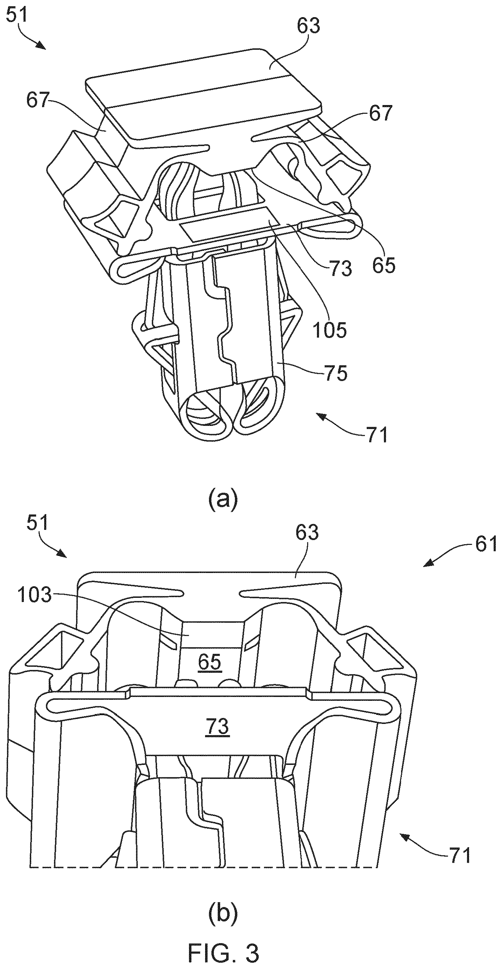

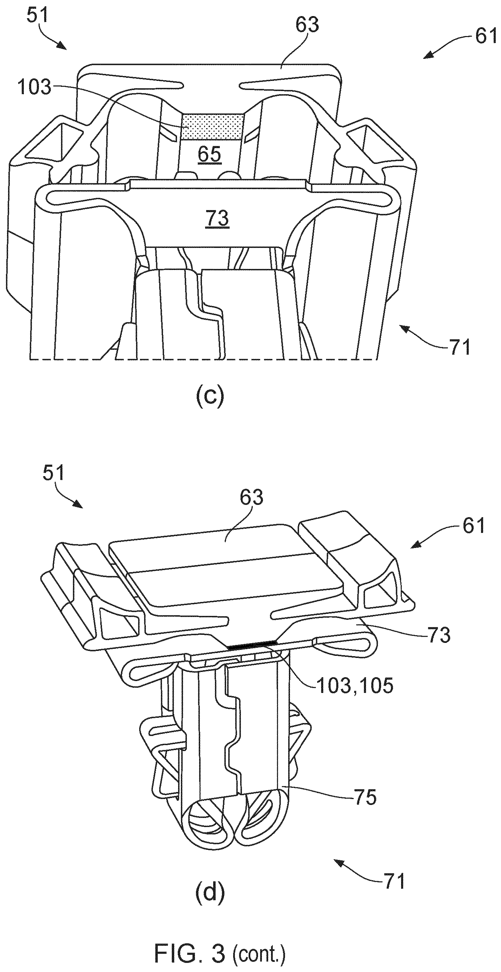

Figure 3 shows the fastener assembly 51 of Figure 2 comprising a radio-frequency identification (RFID) system. The head 61 is provided with a first portion 103 of the RFID system. The base 71 is provided with a second portion 105 of the RFID system. In this example embodiment, the first portion 103 of the RFID system is located on the central rib 65 of the head 61, and the second portion 105 of the RFID system is provided on the connector plate 73 of the base 71. More specifically, the first portion 103 is arranged on a lower surface of the central rib 65, facing the connector plate 73. The second portion 105 is arranged on an upper surface of the connector plate 73, facing the central rib 65. This arrangement operably positions the first portion 103 and second portion 105 of the RFID system opposite one another. Although, in this particular embodiment, the RFID system is arranged centrally on the rib 65 and the connector plate 73, is it envisaged that the RFID system can be positioned on any other suitable parts or portions of the head 61 and/or base 71.

In this example embodiment of the invention, the first portion 103 of the RFID system includes a RFID integrated circuit (IC) and the second portion 105 of the RFID system includes a RFID antenna. In alternative example embodiments, the first portion 103 may include a RFID antenna and the second portion 105 may include the RFID IC. The first portion 103 and the second portion 105 of the RFID system together form a RFID tag. In this particular example, the RFID tag of the fastener assembly 51 is a passive tag (i.e. absent of its own power source). When the IC and antenna are displaced from one another ,i.e. first and second portion 103, 105 are positioned at a predetermined minimum distance from each other, the RFID tag is disconnected and inoperable, i.e. unable to actuate a signal transmission. When the first portion 103 and second portion 105 of the RFID system come into electrical contact or are moved to be within a predetermined threshold distance from one another, such that the IC and antenna can operably engage, the RFID tag is now operable to actuate a signal transmission.

In another embodiment of the present invention, the first portion 103 of the RFID system includes an RFID tag with the integrated circuit (IC) and the antenna but with a missing connector link (e.g. a missing electrical contact or "bridge"), thus, rendering the first portion 103 inoperable. The second portion 105 of the RFID system comprises the connector link that, when the fastener head 61 and base 71 are correctly locked in, provides the missing electrical contact to render the first portion 103 operable.

Furthermore, it is understood buy the person skilled in the art that any other suitable switch mechanism may be used to "switch" the first portion 103 ON or OFF according to the relative position between the head portion 61 and the base portion 71. Switching ON may be understood to turn an inoperable RFID tag into an operable RFID tag, but it may also be an actual switch implemented into the first portion 103 of the RFID tag and which is adapted to be actuated by the second portion 105, e.g. manually or electrically or magnetically.

Referring now to Figures 3(c) and (d), the fastener assembly 51 is shown during use (i.e. coupling or locking or locking engagement).Here, the head 61 is slidingly moved into engagement with the base 61 and subsequently forced downwards towards the base 71. Upon contact between the wings and the connector plate 73, each one of the wings 67 is moved up to wards the end plate and the first portion 103 of the RFID system on the central rib 65 is moved towards the second portion 105 of the RFID system on the connector plate 73. When the head 61 and the base reach a predetermined threshold distance (e.g. contactingly engage), the formerly separate IC and antenna are operably connected (i.e. the antenna is electrically connected to the IC). Once the IC and antenna are connected, the RFID system is capable of actuating signal transmission. More specifically, an interrogating external reader can will receive a response from a correctly coupled (assembled) fastener assembly, thus, verifying a successful connection between the head 61 and the base 71 of the fastener. Any fastener assembly where the coupling between the head 61 and the base 71 is incomplete or incorrect or damaged in any way will not be able to respond to the reader's interrogation, thus, verifying that the connection is incomplete. During interrogation, the interrogation signal received from the external reader is modulated by the antenna so as to provide a signal response verifying (i.e. indicate) that the fastener assembly 51 is in an correctly assembled configuration. Likewise, if the head 61 and the base 71 are coupled to further components to be connected, then the assembly of those components is also verified. The verification of the assembly 51 is communicated by the IC.

Other embodiments incorporating the present invention may include a separate RFID tag provided on each one of the head 61 and base 71. Here, a first RFID tag is placed on a lower surface of the central rib 65, and a second RFID tag is placed on an upper surface of the connector plate 73 such that the first and second RFID tags face one another. An interrogating external reader may now be used determine the relative position between each one of the first and second RFID tag, wherein a predetermined threshold distance will verify whether or not the head 61 and base 71 are coupled correctly.

In yet another embodiment of the present invention, a separate RFID tag may be provided on each of the head 61 and base 71, where each of the first and second RFID tags include an antenna adapted to receive an interrogation signal from an external reader so as to transmit a respective first and second response signal. The transmitted first and second response signals together form a combined signal, when the distance between the first and second RFID tags are equal to or less than a predetermined value. The combination of first and second response signals into a characteristic signal can be used to verify the correct assembly of the head 61 and the base 71.

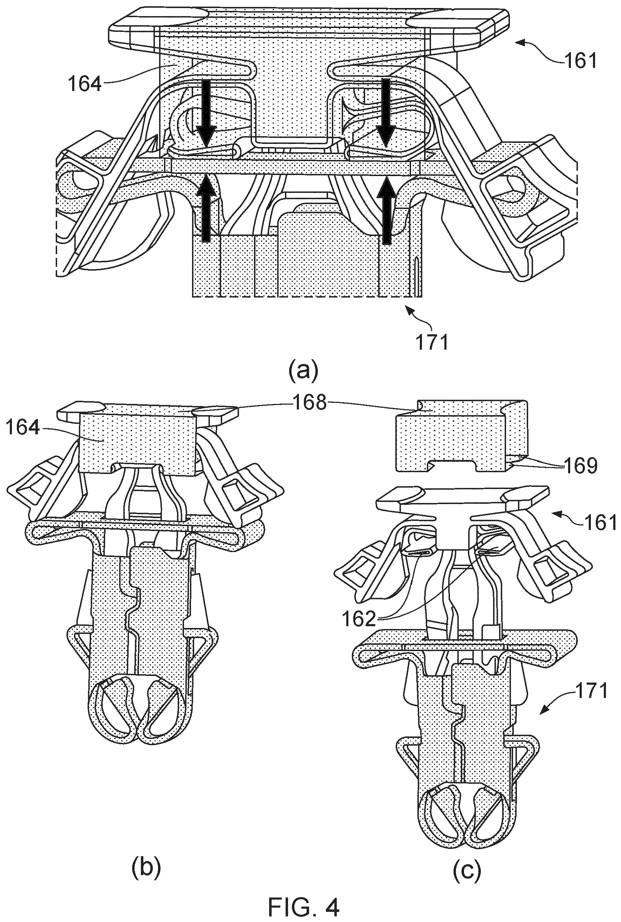

Referring now to Figures 4 to 7, in another example embodiment of the present invention the fastener assembly 151 is provided with two biasing members 162 laterally protruding at the rib portion 165. The biasing members 162 ensure a firm contact between the RFID antenna 164 and the metal surface of the connector plate 173 of the base 171. The electrically conducting contact between the antenna 164 and the base 171 is essential for a good RF (Radio Frequency) performance of the RFIS tag. For example, performance may significantly if there is a gap between the antenna 164 and the base 171 (e.g. a gap of 100-200µm would suffice). Figure 4 shows (a) the assembled (and lockingly engaged) fastener assembly 151 (i.e. coupled head 161 and base 171), (b) the pre-assembled fastener assembly 151 (i.e. head 161 and base 171 are partly assembled but not lockingly engaged) and (c) an exploded view of the fastener base 171 (made from a metal), the fastener head 161 (e.g. made from plastic material) and the antenna (e.g. comprising an RFID sticker). The arrows shown in Figure 4(a) indicate the force between the antenna biasingly coupled to the head 161 (via biasing members 162) and the base 171 when the head and base are lockingly engaged.

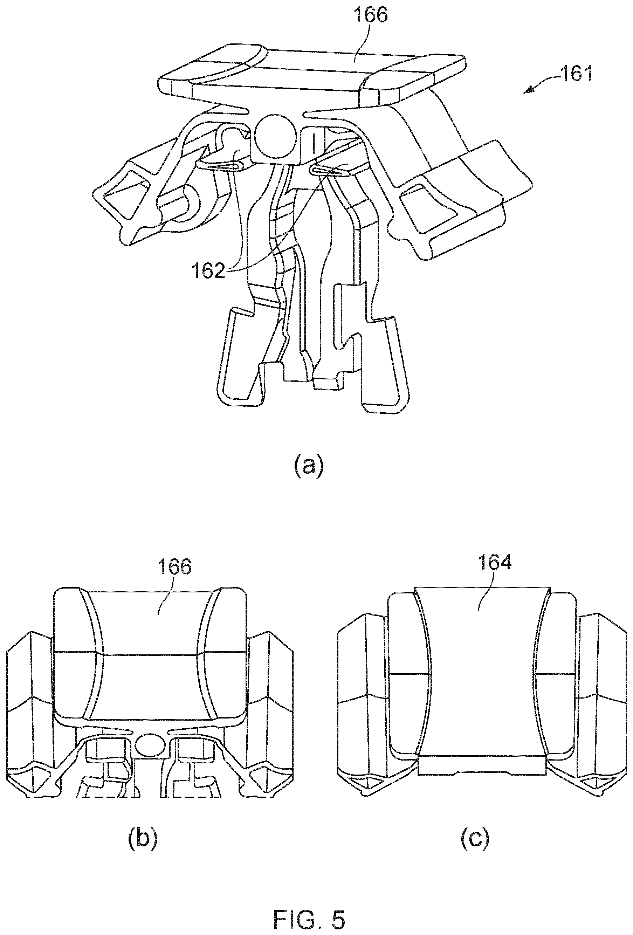

Figures 5(a) to (c) show detailed views of the head 161 and antenna 164. In particular, the end plate 163 of the head 161 comprises a recessed profile feature 166 matching the profile of the antenna 164, so as to allow the antenna top surface 168 to matingly engage with the recessed profile feature on the end plate 163 of the head 161. The mating profile (geometry) of the corresponding antenna 164 portion and end plate 163 ensures that the antenna 164 is correctly mounted onto the end plate 163 of the head 161. Figure 5(b) shows the profile feature 166 of the end plate 163 without the mounted antenna 164.

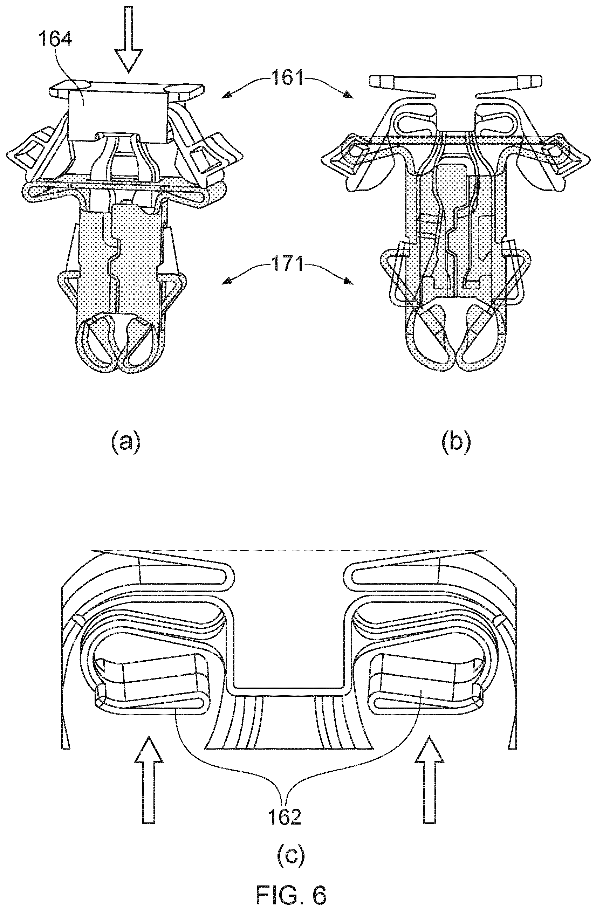

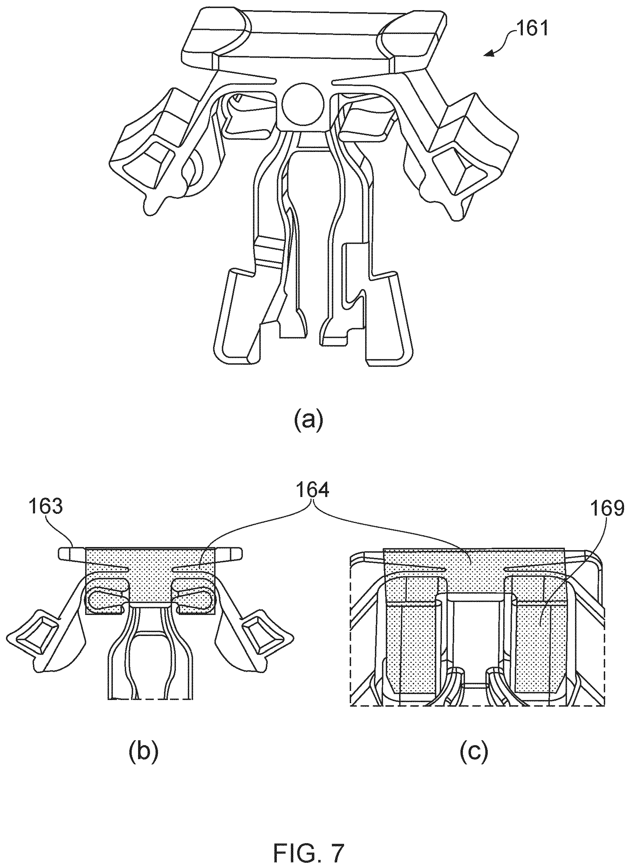

Referring now to Figures 6(a), (b) and (c), during assembly, the antenna 164 is operably coupled with the head 161 by placing its suitably shaped top surface 168 into the respective profile feature 166 and positioning the antennas lower arms 169 into contact engagement with the biasing members 162. When pressing the head 161 into locking engagement with the base 171, the biasing members are pushed up by the connector plate 173 (i.e. towards the end plate 163) such that a biasing force is exerted on the lower arms 169 of the antenna 164 towards the connector plate 173. See also Figures 7(a), (b) and (c), showing the (a) the fastener head 161, (b) the fastener head 161 with coupled antenna 164 (shown transparent for further detail of the engaged bias members 162) and (c) a bottom perspective view of the fastener head 161 and coupled antenna 164, i.e. the antenna arms 169 which form the contact area between the antenna 164 and the connector plate 173.

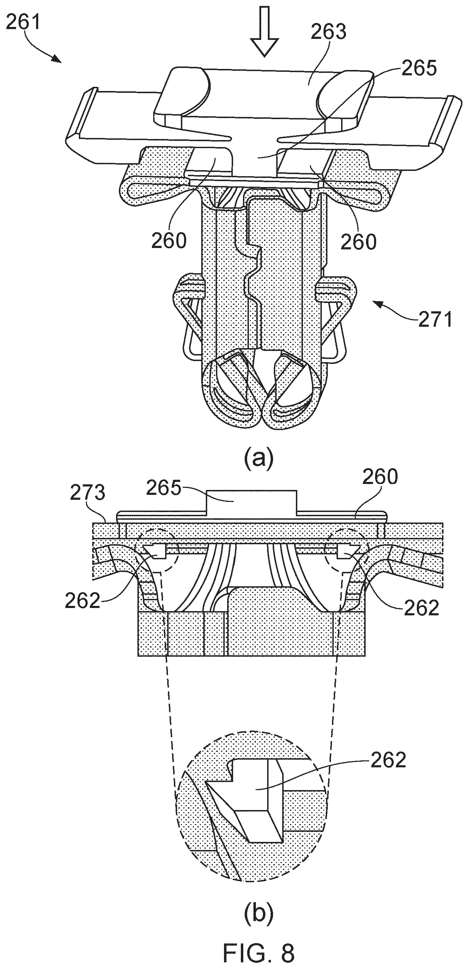

Figures 8(a) and (b) show yet another example embodiment of the present invention. Instead of the biasing members 162 of fastener assembly 151, the alternative fastener assembly 251 comprises hook members 262 provided to a contact surfaces 260 laterally protruding from the central rib 265 and adapted to contactingly engage with the connector plate 273 of the base 271 during use. The connector plate 273 comprises a recess adapted to receive the fastener head 261 and lockingly engage with the hook members 262 when the head 261 is lockingly engaged with the base 271.

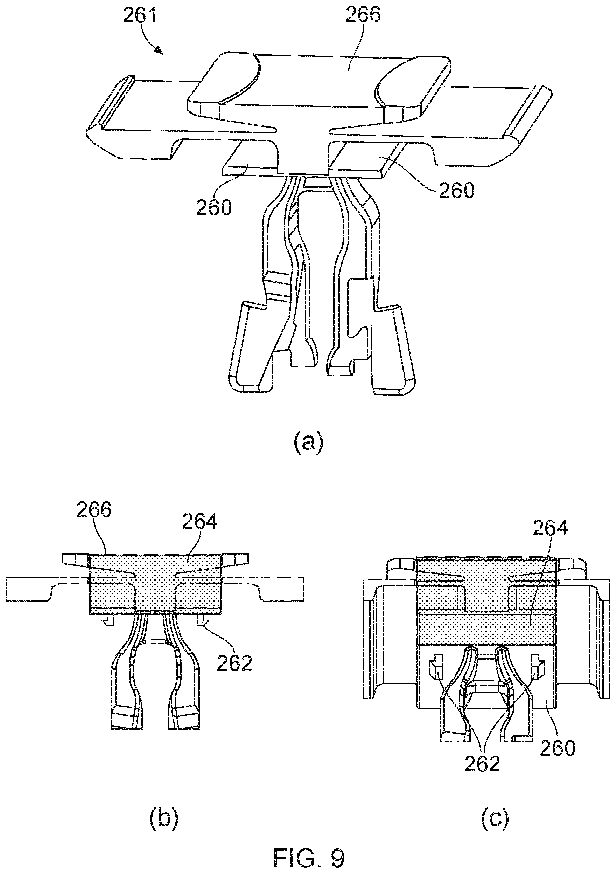

Figures 9(a) and (b) show detailed views of (a) the fastener head 261, (b) the fastener head with coupled antenna 264 positioned into respective profile feature 266 and onto the contact surfaces 260 (antenna 264 shown transparent), and (c) a perspective bottom view of the fastener head 261 and coupled antenna 264.

During use, the fastener head 261 and coupled antenna 264 is moved into the fastener base 273 until the fastener head 261 lockingly engages with the fastener base 273 and the hook members 262 lockingly engage with recess of the connector plate 273, thus, ensuring a secure contact between the antenna 264 and the fastener base 264 (metal).

Through the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. The invention is not restricted to the details of any foregoing embodiments.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

## Claims

1. A fastener assembly (51, 151, 251) for fastening a component to a vehicle structure, comprising:
a head member (61, 161, 261) and a base member (71, 171, 271) operably coupleable with one another, and
**characterised by** a RFID system, operably coupled to said head member (61, 161, 261) and said base member (71, 171, 271) and configured to actuate transmission of a verification signal when said head member (61, 161, 261) and said base member (71, 171, 271) are in a predetermined position relative to one another in an assembled configuration.

2. A fastener assembly according to claim 1, wherein said predetermined position is a predetermined distance between a reference point of said head member (61, 161, 261) and a reference point of said base member (71, 171, 271) when in the assembled configuration.

3. A fastener assembly according to claim 2, wherein said RFID system comprises at least one RFID tag (103, 105), configured to transmit said verification signal.

4. A fastener assembly according to claim 3, wherein said at least one RFID tag comprises a first tag portion (105) mounted to said base member (71, 171, 271), and a second tag portion (103), disconnected from said first tag portion (105) and mounted to said head member (61, 161, 261), each one of said first tag portion (105) and said second tag portion (103) being adapted to operably connect to one another so as to form said at least one RFID tag when said head member (61, 161, 261) and said base member (71, 171, 271) are in the assembled configuration.

5. A fastener assembly according to claim 4, wherein said first tag portion (105) comprises an Integrated Circuit adapted to provide identity information, and said second tag portion (103) comprises a contact member, configured to electrically connect a missing link within said first tag portion (105) so as to change said first tag portion (105) into an operable RFID tag.

6. A fastener assembly according to claim 4, wherein said first tag portion (105) comprises an Integrated Circuit adapted to provide identity information, and said second tag portion (103) comprises an antenna member (164), adapted to receive and modulate an interrogation signal from an RFID reader.

7. A fastener assembly according to claim 3, wherein said RFID system comprises a RFID reader, configured to interrogate said at least one RFID tag (103, 105) and provide said verification signal to a user.

8. A fastener assembly according to claim 7, comprising a first RFID tag (105), operably mounted to said base member (71, 171, 271), and a second RFID tag (103), operably mounted to said head member (61, 161, 261), each one adapted to transmit a respective first and second RFID response signal when interrogated by said RFID reader, said RFID reader being configured to determine a relative position between said reference point of said head member (61, 161, 261) and said reference point of said base member (71, 171, 271) and provide said verification signal to a user when said relative position is less than or equal to said predetermined distance.

9. A fastener assembly according to claim 7, comprising a first RFID tag (105), operably mounted to said base member (71, 171, 271), and a second RFID tag (103), operably mounted to said head member (61, 161, 261), each one adapted to transmit a respective first and second RFID response signal when interrogated by said RFID reader, wherein said first and second RFID response signal are combined to a characteristic response signal transmitted to said RFID reader when said head member (61, 161, 261) and said base member (71, 171, 271) are in the assembled configuration.

10. A fastener assembly according to any one of claims 3 to 9, wherein said at least one RFID tag (103, 105) is a passive tag.

11. A fastener assembly according to any one of the preceding claims, wherein said RFID system comprises an antenna member (164) operably coupleable to said head member (61, 161, 261).

12. A fastener assembly according to claim 11, wherein said head member (61, 161, 261) further comprises at least one biasing member (162) adapted to operably engage with said antenna member (164) and biasingly engage with said base member (71, 171, 271) when in said assembled configuration.

13. A fastener assembly according to claim 11, wherein said head member (61, 161, 261) further comprises at least one hook member (262) adapted to operably engage with said antenna member (164) and lockingly engage with said base member (71, 171, 271) when in said assembled configuration.

## Patentansprüche

1. Befestigungsmittelanordnung (51, 151, 251) zum Befestigen einer Komponente an einer Fahrzeugstruktur, Folgendes aufweisend:
ein Kopfelement (61, 161, 261) und ein Basiselement (71, 171, 271), die miteinander wirkverbunden werden können, und
**gekennzeichnet durch** ein RFID-System, das mit dem Kopfelement (61, 161, 261) und dem Basiselement (71, 171, 271) wirkverbunden und so konfiguriert ist, dass es die Übertragung eines Verifizierungssignals auslöst, wenn sich das Kopfelement (61, 161, 261) und das Basiselement (71, 171, 271) in einer zusammengebauten Konfiguration in einer vorgegebenen Position relativ zueinander befinden.

2. Befestigungsmittelanordnung nach Anspruch 1, wobei die vorgegebene Position ein vorgegebener Abstand zwischen einem Referenzpunkt des Kopfelements (61, 161, 261) und einem Referenzpunkt des Basiselements (71, 171, 271) ist, wenn sie sich in der zusammengebauten Konfiguration befinden.

3. Befestigungsmittelanordnung nach Anspruch 2, wobei das RFID-System zumindest einen RFID-Tag (103, 105) aufweist, der so konfiguriert ist, dass er das Verifizierungssignal überträgt.

4. Befestigungsmittelanordnung nach Anspruch 3, wobei der zumindest eine RFID-Tag einen ersten Tag-Abschnitt (105) aufweist, der an dem Basiselement (71, 171, 271) angebracht ist, und einen zweiten Tag-Abschnitt (103), der von dem ersten Tag-Abschnitt (105) getrennt und an dem Kopfelement (61, 161, 261) angebracht ist, wobei sowohl der erste Tag-Abschnitt (105) als auch der zweite Tag-Abschnitt (103) so ausgebildet sind, dass sie sich wirkverbinden, um dem zumindest einen RFID-Tag zu bilden, wenn sich das Kopfelement (61, 161, 261) und das Basiselement (71, 171, 271) in der zusammengebauten Konfiguration befinden.

5. Befestigungsmittelanordnung nach Anspruch 4, wobei der erste Tag-Abschnitt (105) eine integrierte Schaltung aufweist, die dazu ausgebildet ist, Identitätsinformation bereitzustellen, und der zweite Tag-Abschnitt (103) ein Kontaktelement aufweist, das so konfiguriert ist, dass es eine fehlende Verbindung innerhalb des ersten Tag-Abschnitts (105) elektrisch verbindet, um den ersten Tag-Abschnitt (105) zu einem funktionsfähigen RFID-Tag zu machen.

6. Befestigungsmittelanordnung nach Anspruch 4, wobei der erste Tag-Abschnitt (105) eine integrierte Schaltung aufweist, die dazu ausgebildet ist, Identitätsinformation bereitzustellen, und der zweite Tag-Abschnitt (103) ein Antennenelement (164) aufweist, das dazu ausgebildet ist, ein Abfragesignal von einem RFID-Lesegerät zu empfangen und zu modulieren.

7. Befestigungsmittelanordnung nach Anspruch 3, wobei das RFID-System ein RFID-Lesegerät aufweist, das so konfiguriert ist, dass es zumindest einen RFID-Tag (103, 105) abfragt und einem Benutzer das Verifizierungssignal bereitstellt.

8. Befestigungsmittelanordnung nach Anspruch 7, das einen ersten RFID-Tag (105) aufweist, der wirkungsmäßig an dem Basiselement (71, 171, 271) angebracht ist, und einen zweiten RFID-Tag (103), der wirkungsmäßig an dem Kopfelement (61, 161, 261) angebracht ist, die jeweils so ausgebildet sind, dass sie ein entsprechendes erstes und zweites RFID-Antwortsignal übertragen, wenn sie von dem RFID-Lesegerät abgefragt werden, wobei das RFID-Lesegerät so konfiguriert ist, dass es eine relative Position zwischen dem Referenzpunkt des Kopfelements (61, 161, 261) und dem Referenzpunkt des Basiselements (71, 171, 271) ermittelt und einem Benutzer das Verifizierungssignal bereitstellt, wenn die relative Position kleiner oder gleich dem vorgegebenen Abstand ist.

9. Befestigungsmittelanordnung nach Anspruch 7, das einen ersten RFID-Tag (105) aufweist, der wirkungsmäßig an dem Basiselement (71, 171, 271) angebracht ist, und einen zweiten RFID-Tag (103), der wirkungsmäßig an dem Kopfelement (61, 161, 261) angebracht ist, die jeweils so ausgebildet sind, dass sie ein entsprechendes erstes und zweites RFID-Antwortsignal übertragen, wenn es von dem RFID-Lesegerät abgefragt wird, wobei das erste und das zweite RFID-Antwortsignal zu einem charakteristischen Antwortsignal kombiniert werden, das dem RFID-Lesegerät übertragen wird, wenn sich das Kopfelement (61, 161, 261) und das Basiselement (71, 171, 271) in der zusammengebauten Konfiguration befinden.

10. Befestigungsmittelanordnung nach einem der Ansprüche 3 bis 9, wobei der zumindest eine RFID-Tag (103, 105) ein passiver Tag ist.

11. Befestigungsmittelanordnung nach einem der vorhergehenden Ansprüche, wobei das RFID-System ein Antennenelement (164) aufweist, das mit dem Kopfelement (61, 161, 261) wirkverbunden werden kann.

12. Befestigungsmittelanordnung nach Anspruch 11, wobei das Kopfelement (61, 161, 261) ferner zumindest ein Vorspannelement (162) aufweist, das so ausgebildet ist, dass es mit dem Antennenelement (164) wirkungsmäßig in Eingriff kommt und mit dem Basiselement (71, 171, 271) in der zusammengebauten Konfiguration vorgespannt in Eingriff kommt.

13. Befestigungsmittelanordnung nach Anspruch 11, wobei das Kopfelement (61, 161, 261) ferner zumindest ein Hakenelement (262) aufweist, das so ausgebildet ist, dass es mit dem Antennenelement (164) wirkungsmäßig in Eingriff kommt und mit dem Basiselement (71, 171, 271) in der zusammengebauten Konfiguration in verriegelnd in Eingriff kommt.

## Revendications

1. Ensemble de fixation (51, 151, 251) pour fixer un composant à une structure de véhicule, comprenant :
un élément de tête (61, 161, 261) et un élément de base (71, 171, 271) pouvant être couplés de manière fonctionnelle l'un à l'autre, et
**caractérisé par** un système RFID, couplé de manière fonctionnelle audit élément de tête (61, 161, 261) et audit élément de base (71, 171, 271) et configuré pour actionner la transmission d'un signal de vérification lorsque ledit élément de tête (61, 161, 261) et ledit élément de base (71, 171, 271) sont dans une position prédéterminée l'un par rapport à l'autre dans une configuration assemblée.

2. Ensemble de fixation selon la revendication 1, dans lequel ladite position prédéterminée est une distance prédéterminée entre un point de référence dudit élément de tête (61, 161, 261) et un point de référence dudit élément de base (71, 171, 271) lorsqu'il est dans la configuration assemblée.

3. Ensemble de fixation selon la revendication 2, dans lequel ledit système RFID comprend l'au moins une étiquette RFID (103, 105), configurée pour transmettre ledit signal de vérification.

4. Ensemble de fixation selon la revendication 3, dans lequel ladite l'au moins une étiquette RFID comprend une première portion d'étiquette (105) montée sur ledit élément de base (71, 171, 271), et une deuxième portion d'étiquette (103), déconnectée de ladite première portion d'étiquette (105) et montée sur ledit élément de tête (61, 161, 261), chacune de ladite première portion d'étiquette (105) et de ladite deuxième portion d'étiquette (103) étant adaptée pour se connecter de manière fonctionnelle l'une à l'autre de manière à former ladite au moins une étiquette RFID lorsque ledit élément de tête (61, 161, 261) et ledit élément de base (71, 171, 271) sont en configuration assemblée.

5. Ensemble de fixation selon la revendication 4, dans lequel ladite première portion d'étiquette (105) comprend un Circuit Intégré adapté pour fournir des informations d'identité, et ladite deuxième portion d'étiquette (103) comprend un élément de contact, configuré pour connecter électriquement une liaison manquante au sein de ladite première portion d'étiquette (105) de manière à modifier ladite première portion d'étiquette (105) en une étiquette RFID fonctionnelle.

6. Ensemble de fixation selon la revendication 4, dans lequel ladite première portion d'étiquette (105) comprend un Circuit Intégré adapté pour fournir des informations d'identité, et ladite deuxième portion d'étiquette (103) comprend un élément d'antenne (164), adapté pour recevoir et moduler un signal d'interrogation provenant d'un lecteur RFID.

7. Ensemble de fixation selon la revendication 3, dans lequel ledit système RFID comprend un lecteur RFID, configuré pour interroger ladite au moins une étiquette RFID (103, 105) et fournir ledit signal de vérification à un utilisateur.

8. Ensemble de fixation selon la revendication 7, comprenant une première étiquette RFID (105), montée de manière fonctionnelle sur ledit élément de base (71, 171, 271), et une deuxième étiquette RFID (103), montée de manière fonctionnelle sur ledit élément de tête (61, 161, 261), chacune adaptée pour transmettre un premier et un deuxième signal de réponse RFID respectifs lorsqu'ils sont interrogés par ledit lecteur RFID, ledit lecteur RFID étant configuré pour déterminer une position relative entre ledit point de référence dudit élément de tête (61, 161, 261) et ledit point de référence dudit élément de base (71, 171, 271) et fournir ledit signal de vérification à un utilisateur lorsque ladite position relative est inférieure ou égale à ladite distance prédéterminée.

9. Ensemble de fixation selon la revendication 7, comprenant une première étiquette RFID (105), montée de manière fonctionnelle sur ledit élément de base (71, 171, 271), et une deuxième étiquette RFID (103), montée de manière fonctionnelle sur ledit élément de tête (61, 161, 261), chacune adaptée pour transmettre un premier et un deuxième signal de réponse RFID respectifs lorsqu'elles sont interrogées par ledit lecteur RFID, dans lequel lesdits premier et deuxième signaux de réponse RFID sont combinés à un signal de réponse caractéristique transmis audit lecteur RFID lorsque ledit élément de tête (61, 161, 261) et ledit élément de base (71, 171, 271) sont en configuration assemblée.

10. Ensemble de fixation selon l'une quelconque des revendications 3 à 9, dans lequel ladite au moins une étiquette RFID (103, 105) est une étiquette passive.

11. Ensemble de fixation selon l'une quelconque des revendications précédentes, dans lequel ledit système RFID comprend un élément d'antenne (164) pouvant être couplé de manière fonctionnelle audit élément de tête (61, 161, 261).

12. Ensemble de fixation selon la revendication 11, dans lequel ledit élément de tête (61, 161, 261) comprend en outre au moins un élément de sollicitation (162) adapté pour venir en prise de manière fonctionnelle avec ledit élément d'antenne (164) et venir en prise en sollicitation avec ledit élément de base (71, 171, 271) lorsqu'il est dans ladite configuration assemblée.

13. Ensemble de fixation selon la revendication 11, dans lequel ledit élément de tête (61, 161, 261) comprend en outre au moins un élément de crochet (262) adapté pour venir en prise de manière fonctionnelle avec ledit élément d'antenne (164) et venir en prise de manière verrouillable avec ledit élément de base (71, 171, 271) lorsqu'il est dans ladite configuration assemblée.
